# EUROPÄISCHE PATENTSCHRIFT

(11) **EP 2 853 144 B1**
(45) Veröffentlichungstag und Bekanntmachung des Hinweises auf die Patenterteilung: **24.10.2018**
(21) Anmeldenummer: 14178676.4
(22) Anmeldetag: 28.07.2014
(51) Int. Cl.: G01D 7/06, A01D 41/127

(54) **Landwirtschaftliche Arbeitsmaschine mit einer Anzeigevorrichtung**
Agricultural machine comprising a display device
Machine agricole dotée d'un dispositif d'affichage

(30) Priorität: 26.09.2013 DE 102013110610
(43) Veröffentlichungstag der Anmeldung: 01.04.2015
(73) Patentinhaber: CLAAS Selbstfahrende Erntemaschinen GmbH, 33428 Harsewinkel (DE)
(72) Erfinder: Neu, Sebastian, 49196 Bad Laer (DE); Losch, Michael, 33775 Versmold (DE); Terörde, Stefan, 48231 Wafrendorf (DE); Schäfer, Klaus, 59302 Oelde (DE); Baumgarten, Joachim, 48361 Beelen (DE); Brune, Markus, 33428 Harsewinkel (DE); Holtmann, Bernd, 48324 Sendenhorst (DE); Thiesmann, Waldemar, 49080 Osnabrück (DE)

(56) Entgegenhaltungen:
- DE-A1- 2 829 634
- DE-A1- 3 718 439
- DE-A1- 19 909 163
- DE-A1-102005 015 178
- DE-A1-102009 042 097
- DE-C- 673 563
- US-B1- 7 145 442

## Beschreibung

Die Erfindung betrifft eine landwirtschaftliche Arbeitsmaschine mit einer Anzeigevorrichtung gemäß dem Oberbegriff des Patentanspruches 1.

Einem Bediener einer landwirtschaftlichen Arbeitsmaschine werden eine Vielzahl an Parametern sowohl der Arbeitsmaschine, beispielsweise die Fahrgeschwindigkeit oder der Kraftstoffverbrauch, als auch der einzelnen Arbeitsaggregate, beispielsweise deren Einstellparameter, angezeigt. Die angezeigten Parameter muss der Bediener beobachten um frühzeitig Ausfälle zu erkennen und um die Leistungsfähigkeit der Maschine so hoch wie möglich zu halten. Um die Leistungsfähigkeit der Arbeitsmaschine unter ständig wechselnden äußeren Einflüssen zu gewährleisten ist es erforderlich, dass der Bediener neben der kontinuierlichen Überwachung auch entscheidet, welche Parameter wie nachzuregeln sind.

In der EP 2 186 394 A1 ist eine Anzeigeeinheit zur Anzeige von Betriebsparametern einer Landmaschine gezeigt, wobei die Anzeigeeinheit derart ausgestaltet ist, dass eine Mehrzahl von Teilflächen darstellbar sind, denen jeweils ein Betriebsparameter zugeordnet ist, wobei in einem ersten Betriebszustand des Arbeitsaggregates eine geschlossene Grundfläche mit einem zentralen geometrischen Schwerpunkt darstellbar ist und eine erste Teilfläche seitlich von einer zweiten Teilfläche begrenzt wird, und dass in einem zweiten Betriebszustand des Arbeitsaggregates eine Seite der ersten Teilfläche in ihrem mittleren Abstand zu dem zentralen geometrischen Schwerpunkt verändert ist. Eine Änderung des Betriebszustandes führt dabei jedoch zu einer zergliederten Ansicht der dargestellten Teilflächen, wodurch für den Bediener ein Abgleichen funktional zusammenhängender Parameter erschwert werden kann.

Die DE102007022899 A1 offenbart eine landwirtschaftliche Arbeits- oder Erntemaschine mit wenigstens einem Arbeitsaggregat und einer Fahrerkabine, in der über einer in zumindest einer Anzeigeeinheit dargestellten elektronischen Basisanzeigefläche, mehrere in unterschiedlichen Funktionsfenstern angelegte Maschinen- und/oder Erntegutparameter visualisiert werden und wobei die Aktivierung und Ansteuerung der Basisanzeigefläche mittels einer Bedienvorrichtung erfolgt, wobei zumindest im Arbeits- bzw. Erntebetrieb auf der Anzeigeeinheit wenigstens eine die Basisanzeigefläche überlagernde, wenigstens ein Funktionsfenster aufweisende Zusatzanzeigefläche anzeigbar ist, wobei das Aktivieren und das Ansteuern der Zusatzanzeigefläche und des wenigstens einen Funktionsfensters mittels wenigstens einer separaten Bedienvorrichtung erfolgt. Durch die Aktivierung eines Zusatzfensters können zwar zusätzliche Informationen angezeigt werden, allerdings werden hierfür bereits angezeigte Informationen verdeckt. Zudem kann der Bediener die zusätzlich angezeigten Informationen nicht dauerhaft beobachten.

Es ist daher Aufgabe der zugrundeliegenden Erfindung eine Anzeigevorrichtung zu schaffen, die eine gleichzeitige, übersichtliche Darstellung einer Vielzahl an Parametern ermöglicht, um einem Bediener einer landwirtschaftlichen Arbeitsmaschine eine verbesserte Übersicht über relevante Prozesse zu ermöglichen.

Die Aufgabe wird erfindungsgemäß durch das kennzeichnende Merkmal des Patentanspruches 1 gelöst, wobei in den weiteren Patentansprüchen Merkmale aufgeführt sind, die diese Lösung in vorteilhafter Weise weiterentwickeln.

Indem die Anzeigeeinheit konzentrisch angeordnete Anzeigeelemente in Form von Kreisringausschnitten und mindestens eine die Anzeigeelemente radial außenseitig zumindest teilweise umfassende Balkenanzeige aufweist, können eine Vielzahl an Parametern in kompakter und besonders übersichtlicher Form dargestellt werden, so dass der Bediener der Arbeitsmaschine alle relevanten Parameter mit einem Blick erfassen kann. Durch die grafisch geschlossene, benachbarte Anordnung der flächigen Anzeigeelemente, die von der Balkenanzeige außenseitig umfasst werden, können Parameter durch den Bediener, insbesondere durch die flächige Anzeige der Werte, einfach erfasst und verglichen werden, wodurch die benötigte Information, beispielsweise zum Einstellen eines Arbeitsaggregates, schnell und ohne weiteres Umwandeln von Zahlenwerten erfasst werden kann. Zudem kann durch die Balkenanzeige dem Bediener ein weiterer parameterbasierter Wert in besonders hervorgehobener Position angezeigt werden, wobei diese durch die außenseitige umlaufende Anordnung dem Bediener einen schnellen Überblick über den Wert und/oder eine Veränderungstendenz des Wertes des zugrundeliegenden Parameters ermöglicht. Durch die längliche, insbesondere kreisbogenförmige Form der Balkenanzeige können auch kleine Änderungen des zugrundeliegenden Parameters für den Bediener deutlich sichtbar gemacht werden. Indikatorelemente, welche entlang der Skalierung der Balkenanzeige angeordnet sein können, ermöglichen eine übersichtliche und eindeutige Anzeige bzw. Kennzeichnung von definierten Werten, die für den Bediener von besonderem Interesse sein können. Die Indikatorelemente können Minimalwerte und/oder Maximalwerte, beispielsweise Grenzwerte, darstellen, die nicht unter- oder überschritten werden sollen. Ebenso können durch die Indikatorelemente Parameter und/oder Arbeitsaggregate dargestellt werden, die einen, insbesondere begrenzenden, Einfluss auf den in durch die Balkenanzeige dargestellten Parameter ausüben. Dadurch kann der Bediener zügig und ohne weiteres Überlegen erkennen, ob und wenn ja welche Maßnahme zu treffen ist, um beispielsweise einen begrenzenden Einfluss auf den angezeigten Parameter zu beeinflussen.

In vorteilhafter Weiterbildung der Erfindung ist die Größe der Anzeigefläche des Anzeigeelementes dynamisch entsprechend einer Änderung des zugeordneten Parameters anpassbar, wobei für den Bediener eine Änderung auf einen Blick, ohne genaues Lesen von beispielsweise Zahlenwerten, erfassbar ist, wodurch insbesondere bei längeren Arbeiten eine ermüdungsfreie Anzeige von Informationen gewährleistet ist.

Durch die Ausbildung von Teilflächen, denen einzelne Parameter zuordbar sind, können funktional zusammenhängende Parameter einzeln, aber in direktem Zusammenhang mit einem Gesamtergebnis, übersichtlich dargestellt werden. Dadurch können dem Bediener Detailinformationen, beispielsweise eines einzelnen Parameters, zur Verfügung gestellt werden, ohne die Übersichtlichkeit der Anzeigeeinheit zu verringern.

Indem in einer vorteilhaften Weiterbildung der Erfindung die einer Anzeigefläche zugeordneten Teilflächen eine Verlustanzeige repräsentieren und wobei die Teilflächen zumindest den Verlust einer Reinigungseinrichtung und den Verlust einer Abscheidevorrichtung umfassen und wobei die Aufsummierung der Teilflächen in radialer Richtung dem Gesamtverlust der landwirtschaftlichen Arbeitsmaschine entspricht wird sichergestellt, dass der Bediener der landwirtschaftlichen Arbeitsmaschine auf einen Blick visuell erfassen kann, ob die Gesamtverluste der landwirtschaftlichen Arbeitsmaschine in einem akzeptablem Bereich liegen.

In einer weiteren vorteilhaften Ausgestaltung der Erfindung ist zudem vorgesehen, dass die einer Anzeigefläche zugeordneten Teilflächen eine Überkehranzeige repräsentieren und wobei die Teilflächen zumindest den Gesamtvolumenstrom einer Überkehr als Überkehranzeige und den Kornvolumenstrom als Kornüberkehr umfassen und wobei das relative Flächenverhältnis der Teilflächen zueinander dem relativen Verhältnis des Gesamtvolumenstroms der Überkehr zur Kornüberkehr der landwirtschaftlichen Arbeitsmaschine entspricht. Eine derartige Anzeigenstruktur hat insbesondere den Effekt, dass der Bediener auf einen Blick erkennt, ob der Kornanteil in der Überkehr auf einen guten Reinheitsgrad des Korns und einen niedrigen Bruchkornanteil schließen lässt, da ein zu hoher Kornanteil ein Indikator für hohe Bruchkornneigung ist, während ein zu niedriger Kornanteil ein Indikator für eine Verschlechterung des Kornreinheitsgrades ist.

Dadurch, dass ein Minimal- und/oder Maximalwert eines Anzeigeelementes anzeigbar ist, kann eine optische Kontrolle der Anzeigeelemente und der diesen zugrundeliegenden Parameter vereinfacht werden, da die Fläche des Anzeigeelementes unmittelbar mit einem innerhalb und/oder außerhalb der Anzeigefläche des Anzeigeelementes anzeigbaren Grenzwert, beispielsweise in Form einer Grenzlinie, vergleichbar ist.

In einer vorteilhaften Ausführung weist die Anzeigeeinheit eine Zentralanzeige auf, wodurch eine bestimmte Information für den Bediener besonders herausstellbar ist.

Durch die Zuordnung von Piktogrammen zu den Anzeigeelementen und/oder Indikatorelementen kann für den Bediener die Zuordnung des jeweiligen Anzeigeelementes und/oder Indikatorelementes zu einem zugeordneten Parameter oder Arbeitsaggregat vereinfacht werden.

Dadurch, dass die den Anzeigeelementen, Indikatorelementen und/oder Piktogrammen zugeordneten Parameter und/oder Arbeitsaggregate, insbesondere nach einer Auswahl eines zugeordneten Anzeigeelementes, Indikatorelementes und/oder Piktogramms, manuell oder automatisch einstellbar sind, hat der Bediener die Möglichkeit jederzeit das entsprechende Anzeigeelement, Indikatorelement oder Piktogramm anzuwählen und Einstellungen an den zugrundeliegenden regelbaren Parametern vorzunehmen, ohne dass der Informationsfluss beeinträchtigt wird.

Zudem kann der Bediener der landwirtschaftlichen Arbeitsmaschine die Effizienz der Arbeitsmaschine dann schnell erfassen und gegebenenfalls effizienzverbessernde Maßnahmen einleiten, wenn in einer vorteilhaften Ausgestaltung der Erfindung die Zentralanzeige die Maximalleistung der landwirtschaftlichen Arbeitsmaschine vorzugsweise eine Ernteleistung in Tonnen/Hektar und/oder eine relative Auslastung der landwirtschaftlichen Arbeitsmaschine in Prozent visualisiert.

Dieser Effekt lässt sich auch dadurch noch steigern, wenn in einer vorteilhaften Weiterbildung der Erfindung die Position des jeweilige Indikatorelement der maximalen Leistungsfähigkeit des jeweils visualisierten Parameters und/oder Arbeitsaggregates entspricht, sodass der Bediener schnell das leistungsbegrenzende Arbeitsorgan identifizieren und geeignete Gegenmaßnahmen einleiten kann.

Ein weiterer Vorteil wird dadurch erreicht, dass die Anzeigeeinheit veränderbar und/oder erweiterbar ist. Hierdurch wird eine individuelle, auf einen speziellen Arbeitsvorgang der Arbeitsmaschine ausgerichtete, Gestaltung der Anzeigeeinheit ermöglicht, so dass der Bediener lediglich die für ihn relevanten Informationen angezeigt bekommt, wodurch die Übersichtlichkeit der Anzeigeeinheit und Anzeigevorrichtung weiter verbessert werden kann.

Vorteilhafterweise weist das Anzeigeelement eine Grundfläche zur Anzeige der Anzeigeelemente, Indikatorelemente und/oder der Balkenanzeige auf, wodurch eine optische Grundstruktur für die Anordnung beispielsweise der Anzeigeelemente vorgegeben werden kann, innerhalb deren die Anzeigeelemente anordbar sind. Dadurch kann eine optische Überladung der Anzeige mit Informationen vermieden werden und gleichzeitig eine für die Informationserfassung optimale Grundstruktur für die Anordnung insbesondere der Anzeigeelemente vorgegeben werden.

Besonders vorteilhaft ist es, wenn die landwirtschaftliche Arbeitsmaschine für die Überwachung und Regelung der Parameter, eine aus dem Stand der Technik bekannte Steuer- und Regeleinrichtung aufweist, die mit der Anzeigevorrichtung verbindbar ist.

Weitere vorteilhafte Ausgestaltungen sind Gegenstand weiterer Unteransprüche und werden nachfolgend anhand von Zeichnungen näher erläutert.

Es zeigen:
- Figur 1:: einen schematischen Querschnitt durch eine landwirtschaftliche Arbeitsmaschine in Form eines Mähdreschers; und
- Figur 2:: eine schematische Darstellung einer Anzeigevorrichtung mit einer mehrere Anzeigeelemente aufweisenden Anzeigeeinheit.

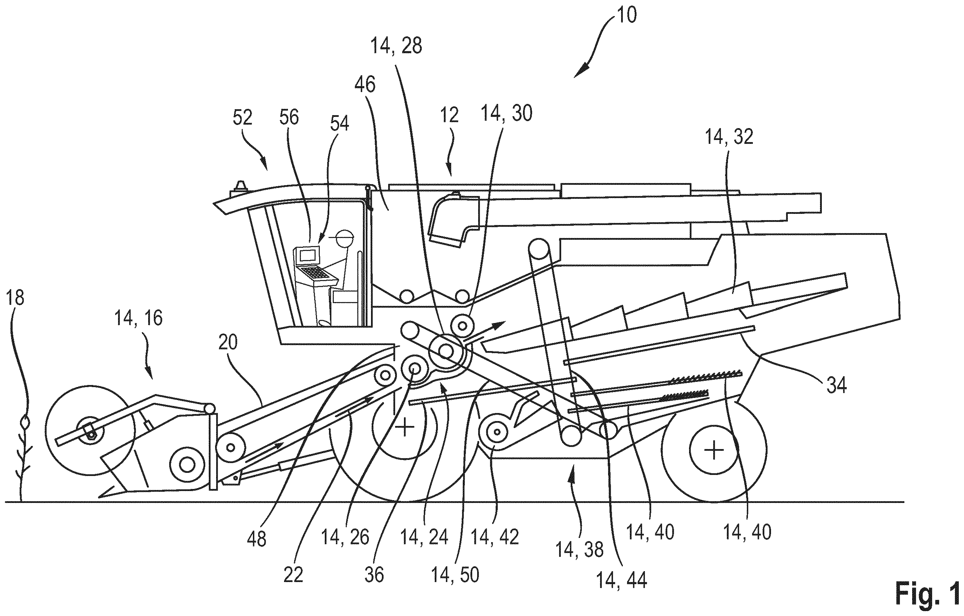

Figur 1 zeigt eine landwirtschaftliche Arbeitsmaschine 10 in Form eines Mähdreschers 12 und deren unterschiedliche Arbeitsaggregate 14. In einem frontseitigen Bereich des Mähdreschers 12 ist ein Schneidwerk 16 angeordnet, welches Erntegut 18 aufnimmt, schneidet und an einen Schrägförderer 20 weiterleitet. Über den Schrägförderer 20 wird das Erntegut 18 als Gutstrom 22 an die Dreschorgane 24 geleitet, wobei die Dreschorgane 24 eine erste Dreschtrommel 26 und eine zweite Dreschtrommel 28 umfassen. Eine den Dreschorganen 24 nachgeordnete Umlenktrommel 30 leitet den Gutstrom 22 zur weiteren Abscheidung von noch im Gutstrom 22 vorhanden Körnern zu einer Abscheidevorrichtung 32. Es liegt im Rahmen der Erfindung, dass die im Ausführungsbeispiel als Hordenschüttler dargestellte Abscheidevorrichtung 32 auch als an sich bekannter und daher nicht dargestellter Trennrotor ausgeführt sein kann. Die in den Dreschorganen 24 und der Abscheidevorrichtung 32 abgeschiedenen Körner werden über einen Rücklaufboden 34 und einen Zuführboden 36 einer Reinigungseinrichtung 38 zugeführt. Die Reinigungseinrichtung 38 weist mehrere Reinigungssiebe 40 und ein Gebläse 42 auf. Gereinigte Körner werden über einen Elevator 44 in einen Korntank 46 transportiert. Bestandteile des Gutstromes 22, die nicht durch die Reinigungssiebe 40 gefallen sind, sondern über diese hinaus transportiert wurden, werden als Überkehr 48 mittels einer Überkehrfördereinrichtung 50 erneut den Dreschorganen 24 zugeführt. Das Schneidwerk 16, der Schrägförderer 20, die Dreschorgane 24, die Abscheidevorrichtung 32, die Reinigungseinrichtung 38, der Elevator 44, der Korntank 46, und die Überkehrfördereinrichtung 50 sind Beispiele für Arbeitsaggregate 14 der landwirtschaftlichen Arbeitsmaschine 10.

In einer Fahrerkabine 52 des Mähdreschers 12 ist eine Anzeigevorrichtung 54 zur Anzeige und/oder Einstellung von Parametern der Arbeitsmaschine 10 und/oder der Arbeitsaggregate 14 angeordnet. Die Anzeigevorrichtung 54 kann, insbesondere für die Überwachung und Regelung der Parameter, mit einer aus dem Stand der Technik bekannten Steuer- und Regeleinrichtung verbunden sein. Zur Optimierung der Einstellungen der Parameter, insbesondere zur Einstellung einer Prozessführungsstrategie, kann die landwirtschaftliche Arbeitsmaschine 10 ein im Stand der Technik bekanntes mit der Anzeigevorrichtung 54 verbindbares Fahrerassistenzsystem 28 aufweisen, welches einem Bediener der landwirtschaftlichen Arbeitsmaschine 10 Vorschläge zur manuellen und/oder automatischen Optimierung der Parameter und/oder Prozesse vorschlagen kann.

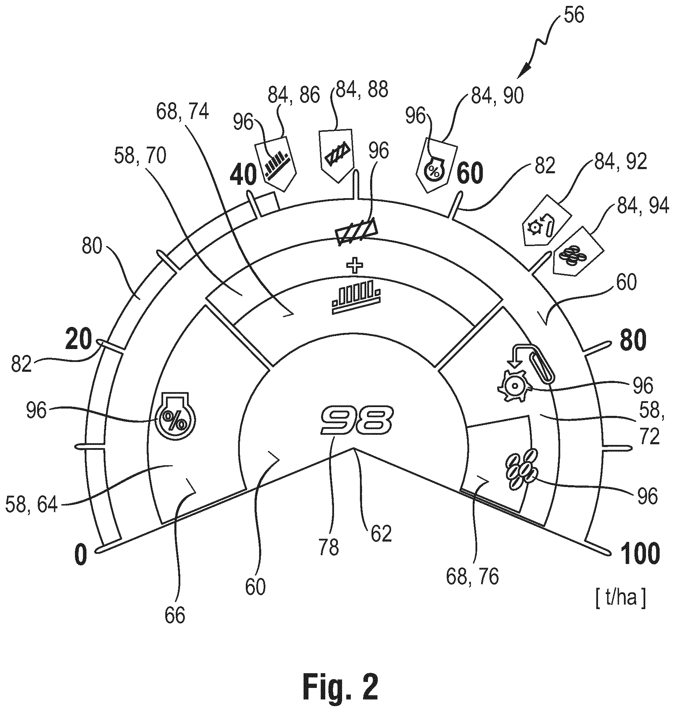

Anzeigbare und/oder einstellbare Parameter der Arbeitsmaschine 10 und/oder der Arbeitsaggregate 14 können beispielsweise eine Fahrgeschwindigkeit, der Kraftstoffverbrauch, Betriebs- und/oder Einstellungsparameter eines Arbeitsaggregates 14 sein. Die Parameter können einen absoluten oder relativen Wert aufweisen. Auch kann ein Parameter eine auf einer Auswertung unterschiedlicher Daten basierende Bewertungsgröße sein, beispielsweise eine Bewertungsgröße für die Maschinenauslastung oder die maximale Leistungsfähigkeit der Arbeitsmaschine 10 bei bestimmten Einstellungen. Durch die optische Darstellung der Parameter, insbesondere der Werte der Parameter, auf der Anzeigevorrichtung 34 kann der Bediener die Arbeitsmaschine 10 steuern und Einstellungen an den Arbeitsaggregaten 14 vornehmen, um beispielsweise die Ernteleistung der Arbeitsmaschine 10 den spezifischen Erntegutbedingungen anzupassen. Für die Visualisierung von aktuellen Werten bestimmter Parameter der landwirtschaftlichen Arbeitsmaschine 10 und/oder der Arbeitsaggregate 14 weist die Anzeigevorrichtung 54 mindestens eine Anzeigeeinheit 56 mit gemeinsam darstellbaren Anzeigeelementen 58 gemäß Figur 2 auf. Die Anzeigeelemente 58 sind auf einem Bildschirm (nicht dargestellt) der Anzeigevorrichtung 54 anzeigbar und können, beispielsweise zur Einstellung von Parametern, bedienbar und/oder einstellbar ausgestaltet sein. Die Anzeigevorrichtung 54 kann zur Vereinfachung der Bedienung und/oder Interaktion mit Anzeigeelementen 58, Balkenanzeige 80 und/oder Indikatorelementen 84 einen berührungsempfindlichen Touchscreen-Bildschirm aufweisen.

Die in Figur 2 dargestellten Inhalte der Anzeigeeinheit 56 sind beispielhaft und werden nachfolgend näher beschrieben. Die dargestellte Anzeigeeinheit 56 weist drei Anzeigeelemente 58 auf, die konzentrisch auf einer geschlossenen Grundfläche 60 angeordnet sind. Die Grundfläche 60 kann dabei einen Öffnungswinkel von ungefähr 225 Grad um einen Mittelpunkt 62 aufweisen. Die Anzeigeelemente 58 können jeweils als Kreis-Teilflächen ausgebildet sein, wobei die Anzeigeelemente 58 von mindestens einem Kreisbogen und zwei einen Öffnungswinkel einschließende Kreisradien oder Kreisradienabschnitte begrenzt werden. Die in Figur 2 dargestellten Anzeigeelemente 58 sind in Form von Kreisringausschnitten ausgebildet, wobei die Kreisringausschnitte radial innen- und außenseitig jeweils durch einen Kreisbogen und in tangentialer, seitlicher, Richtung durch Kreisradien begrenzt sind, wodurch jeweils eine Anzeigefläche 66 eines kreisringausschnittförmigen Anzeigeelementes 58 abgegrenzt wird. Die Anzeigeelemente 58 sind derart konzentrisch um den Mittelpunkt 62 angeordnet, dass die Anzeigeelemente 58 seitlich benachbart zueinander angeordnet sind und zusammen zumindest einen Teil-Kreisring ausbilden. Eine Gesamtausdehnung, insbesondere in tangentialer und/oder radialer Richtung, des so gebildeten Kreisringes oder Kreisringausschnittes kann auch bei einer Änderung der einzelnen Anzeigeelemente 58 und/oder einer Änderung der Anzahl der Anzeigeelemente 58 unverändert bleiben. Durch die Ausbildung der Anzeigeelemente 58 in Form von konzentrisch angeordneten Kreisringausschnitten kann die Übersichtlichkeit der Anzeigeeinheit 56 weiter verbessert werden, da die Anzeigefläche 66 eines Anzeigeelementes 58, beispielsweise gegenüber einem Kreisausschnitt, ohne Informationsverlust für den Bediener der Arbeitsmaschine 10, verringert werden kann. Zudem können die Kreisringausschnitte übersichtlicher, beispielsweise in Form eines Ringes oder Kreisringausschnittes, angeordnet werden.

Zur Visualisierung eines bestimmten Parameters kann die Anzeigefläche 66 eines Anzeigeelementes 58 proportional zur Größe des anzuzeigenden aktuellen Wertes des Parameters ausgebildet sein. So kann beispielsweise eine Auslastung eines Motors der landwirtschaftlichen Arbeitsmaschine 10 durch eine Motorauslastungsanzeige 64 angezeigt werden, wobei die Auslastung des Motors als prozentualer Wert durch eine entsprechend große Anzeigefläche 66 darstellbar ist. Die Anzeigeelemente 58 sind dynamisch an den zu visualisierenden Wert anpassbar, wobei eine Anpassung der Anzeigefläche 66 entsprechend der Änderung des zugrundeliegenden Wertes erfolgen kann. Die Anzeigefläche 66 ist bei einer Größenänderung beispielsweise in radialer und/oder tangentialer Richtung veränderbar. Bei einer dynamischen Anpassung eines Anzeigeelementes 58 kann ein Flächenschwerpunkt der Anzeigefläche 66 stationär verbleiben, oder in radialer und/oder tangentialer Richtung verlagerbar sein. Desweiteren kann eine Anzeige und/oder Veränderung eines zu visualisierenden Parameters zusätzlich oder alternativ durch eine bestimmte Farbe und/oder eine Änderung der Farbe der Anzeigefläche 66 des Anzeigeelementes 58 erfolgen.

Zur Visualisierung von zusammengefassten Werten, beispielsweise eines Gesamtwertes mehrerer Parameter oder eines bestimmten Parameters einer umfassenderen Bewertungsgröße, können die Anzeigeelemente 58 Teilflächen 68 aufweisen, die jeweils einem einzelnen Parameter zugeordnet sein können. Die Teilflächen 68 können dabei beispielsweise innerhalb der Abmessungen der den Gesamtwert darstellenden Anzeigefläche 66 angezeigt werden. Zusammengefasste Werte können beispielsweise eine in Figur 2 dargestellte Verlustanzeige 70 und eine Überkehranzeige 72 sein. Die Verlustanzeige 70 zeigt die in der Abscheidevorrichtung 32 und in der Reinigungseinrichtung 38 auftretenden Verluste summiert an, wobei die in der Reinigungseinrichtung 38 auftretenden Verluste als gesonderte Teilfläche 68, einer Verlustteilfläche 74, dargestellt sind. Der verbleibende, nicht durch die Verlustteilfläche 74 abgedeckte Anteil der Verlustanzeige 70 entspricht dem in der Abscheidevorrichtung 32 auftretenden Verlust. Die Verlustteilfläche 74 ist kleiner und als Kreisringausschnitt mit dem gleichen Öffnungswinkel wie die Verlustanzeige 70 ausgebildet und radial innenseitig in der Verlustanzeige 70 angeordnet. Dadurch wird ein Flächenverhältnis zwischen der Fläche der Verlustteilfläche 74 und der verbleibenden Fläche der Verlustanzeige 70 ausgebildet, die es einem Bediener ermöglicht, auf einen Blick die jeweiligen Verlustanteile in der Abscheidevorrichtung 32 und der Reinigungseinrichtung 38 zu erkennen, wobei die Darstellung mittels Flächen dem Bediener ein verbessertes Erfassen der Verluste ermöglicht als eine reine Darstellung von Zahlenwerten. Weiterhin weist die Überkehranzeige 72 eine Fläche auf, die der gesamten Überkehr 48 entspricht, wobei zur Darstellung der Zusammensetzung der Überkehr 48 zumindest eine Kornüberkehr 76 als Teilfläche 68 in der Überkehranzeige 72 ausgebildet ist, die es dem Bediener ermöglicht, schnell zu erfassen wie hoch der Anteil an Körnern in der Überkehr 48 ist. Die Teilfläche 68 der Kornüberkehr 76 ist in radialer Richtung kürzer und weist einen kleineren Öffnungswinkel als die Überkehranzeige 72 auf und ist an einer Seite radial innenseitig innerhalb der Überkehranzeige 72 angeordnet. Innerhalb eines Anzeigeelementes 58 können mehrere Teilflächen 68 angeordnet sein, wobei zumindest ein Teil der Anzeigefläche 66 des Anzeigeelementes 58 abgedeckt sein kann. Die Teilflächen 68 können zur leichteren Identifikation farblich von der Anzeigefläche 66 abgesetzt sein, wobei Größenänderungen einer Teilfläche 68 genauso wie bei einer Größenänderung einer Anzeigefläche 66 dargestellt werden können. Der Minimal- und/oder Maximalwert eines Anzeigeelementes 58 und/oder einer Teilfläche 68 kann angezeigt werden, beispielsweise durch tangential, radial innen und/oder außenseitig angeordnete, insbesondere kreisbogenförmige, Grenzlinien, die jeweils einen Minimal- oder Maximalwert des oder der angezeigten Parameter darstellen können. Ebenso kann eine farbliche Veränderung einer Teilfläche 68 einer Veränderung des zugrundeliegenden Parameters entsprechen, wobei bestimmte Farbänderungen bestimmten parameterbezogenen Werten, beispielsweise Grenzwerten, zugeordnet sein können. Eine Begrenzung des Anzeigeelementes 58 kann ebenso durch die Grundfläche 60 erfolgen, wobei die Anzeigefläche 66 eines oder mehrerer Anzeigeelemente 58, insbesondere in radialer Richtung, derart skaliert werden kann, dass ein Ausfüllen der Grundfläche 60 und/oder ein Erreichen eines Randes der Grundfläche 60 in radialer Richtung einem Maximalwert oder Grenzwert des visualisierten Parameters entsprechen kann. So kann beispielsweise die Motorauslastungsanzeige 64 derart skaliert sein, dass bei einem Maximalwert die Anzeigefläche 66 den radial außenliegenden Rand der Grundfläche 60 berührt.

Die Anzeigeeinheit 56 weist weiterhin eine Zentralanzeige 78 auf, welche benachbart zu dem Mittelpunkt 62 und radial innenseitig der Anzeigeelemente 58 auf der Grundfläche 60 angeordnet ist. Durch die Zentralanzeige 78 kann numerische oder grafisch, insbesondere mittels einer dynamisch anpassbaren Fläche, ein relativer oder absoluter Wert eines oder mehrerer Parameter besonders übersichtlich dargestellt werden, wodurch einem Bediener das Erfassen dieses Wertes besonders erleichtert werden kann. Die in der Zentralanzeige 78 angezeigte Wert ist ein relativer Wert, der auf eine dynamisch anpassbare Maximalleistung der Arbeitsmaschine 10 und der Arbeitsaggregate 14 bezogen ist. Dadurch kann der Bediener auf einen Blick erkennen, wie viel Prozent der mit den aktuellen Einstellungen maximal erreichbaren Ernteleistung er erreicht, oder ob er bereits die mit den aktuell gegebenen Randbedingungen und Einstellungen erreichbare Maximalleistung erreicht hat. Die dynamisch anpassbare Maximalleistung berücksichtig dabei insbesondere alle die Parameter, die einen Einfluss auf die Leistungsfähigkeit der Arbeitsmaschine ausüben und gegebenenfalls die maximal mögliche Leistungsfähigkeit begrenzen. Denkbar ist auch, dass die Zentralanzeige 78 beispielsweise eine Bewertungsgröße in Form einer Leistung der Arbeitsmaschine 10 und der Arbeitsaggregate anzeigt, wobei bei dem Mähdrescher 12 die Ernteleistung in geernteten Tonnen pro Hektar (t/ha) angegeben und angezeigt werden kann.

Radial außenseitig der Anzeigeelemente 58 kann mindestens eine parameterbezogene, kreisbogenförmige Balkenanzeige 80 angeordnet sein. Die Balkenanzeige 80 kann dabei außerhalb oder innerhalb der Grundfläche 60, beispielsweise benachbart und/oder angrenzend an die Grundfläche 60 und/oder die Anzeigeelemente 58, angeordnet und an deren außenseitigen Verlauf, beispielsweise kreisbogenförmig, angepasst sein kann. Die Balkenanzeige 80 kann die Anzeigeelemente 58 radial außenseitig zumindest teilweise umfassen. Die Balkenanzeige 80 kann eine parameterabhängige Skalierung 82 aufweisen, wobei der anzuzeigende Wert dynamisch in Form eines Balkens anzeigbar ist. Die Balkenanzeige 80 kann den Wert eines Parameters, beispielsweise einen bereits einem Anzeigeelement 58 zugeordneten oder eines weiteren, zusätzlichen Parameters, anzeigen. Mehrere Balkenanzeigen 80, die beispielsweise parallel angeordnet sein können, können unterschiedlichen Parametern zugeordnet sein. Die Balkenanzeige 80 kann insbesondere einen für die Ernteleistung der Arbeitsmaschine 10 wesentlichen Parameter oder Wert visualisieren. Beispielsweise kann die Balkenanzeige 80 den in der Zentralanzeige 78 angezeigten relativen Wert, welcher auf einen bei unveränderten Einstellungen erzielbaren Maximalwert bezogen ist, zusätzlich als absoluten Wert mittels eines dynamisch anpassbaren Balken anzeigen. Dabei kann die Skalierung 82 für eine absolute, maximale Leistung der Arbeitsmaschine 10 und der Arbeitsaggregate ausgelegt sein, wobei beispielsweise quantitativ der Korndurchsatz in geernteten Tonnen pro Hektar (t/ha) angezeigt werden kann.

Durch Indikatorelemente 84 können an der Balkenanzeige 80 definierte Werte des mittels der Balkenanzeige 80 visualisierten Parameters angezeigt und/oder markiert werden. Das Indikatorelement 84 kann dabei einem bestimmten Parameter und/oder Arbeitsaggregat 14 zugeordnet sein, wobei der durch das Indikatorelement 84 angezeigte definierte Wert auf dem jeweiligen zugeordneten Parameter und/oder Arbeitsaggregat 14 basiert. Der definierte Wert kann dabei dynamisch in Abhängigkeit von einer Änderung des Parameters und/oder Arbeitsaggregates 14 angezeigt werden. Der mittels der Balkenanzeige 80 anzeigbare Wert, beispielsweise der Korndurchsatz, kann bei gegebenen und unveränderten Einstellung der Arbeitsmaschine 10 und der Arbeitsaggregate 14 begrenzt sein. Die Parameter und/oder Arbeitsaggregate 14, die einen Einfluss auf die Leistungsfähigkeit der Arbeitsmaschine 10, beispielsweise den Korndurchsatz, ausüben und diesen gegebenenfalls begrenzen, können beispielsweise jeweils durch ein Indikatorelement 84 visualisiert werden. Die Indikatorelemente 84 können an der Balkenanzeige 80, insbesondere entlang der gesamten Skalierung 82, beispielsweise radial außenseitig, angeordnet sein. Die Anordnung eines Indikatorelementes 84 entlang der Balkenanzeige 80 kann der maximalen Leistungsfähigkeit des zugeordneten Parameters und/oder Aggregates 14, gemessen in der Einheit der Skalierung 82, entsprechen. Beispielsweise kann ein Indikatorelement 86, welches der Reinigungseinrichtung 38 zugeordnet ist, anzeigen, dass bei den derzeitigen Einstellungen der Korndurchsatz auf ungefähr 42 t/ha begrenzt ist. Das Indikatorelement 86 ist dann entsprechend der Skalierung 82 bei 42 t/ha an der Balkenanzeige angeordnet. In der Zusammenschau mit der Zentralanzeige 78 kann der Bediener dadurch auf einen Blick erkennen, dass der mit unveränderten Einstellungen erreichbare Korndurchsatz ungefähr 42 t/ha beträgt, und dass er bereits 98% dieses maximalen Wertes erreicht. Zudem ist für den Bediener sofort erkennbar, dass eine Optimierung der Einstellungen der Reinigungseinrichtung 38 den absolut erreichbaren Durchsatz erhöhen kann, da das Indikatorelement 84,86 den niedrigsten Wert der angezeigten Indikatorelemente 84 aufweist. Ein Indikatorelement 84,88, welches der Abscheidevorrichtung 32 zugeordnet ist, zeigt an, dass bei unveränderten Einstellungen die Abscheidevorrichtung 32 den absolut erreichbaren Korndurchsatz auf ungefähr 49 t/ha begrenzen würde. Weiterhin ist eine Begrenzung des Korndurchsatzes durch ein Indikatorelement 84,90, welches der Motorlast zugeordnet ist, ein Indikatorelement 84,92, welches der Überkehr 48 zugeordnet ist, und ein Indikatorelement 84,94, welches der Kornüberkehr 76 zugeordnet ist, anzeigbar. Die einzelnen Indikatorelemente 84,86,88,90,92,94 können dynamisch in Abhängigkeit der Einstellungen des jeweils zugrundeliegenden Parameters und/oder Arbeitsaggregates anpassbar angeordnet sein. Die Anzeigevorrichtung 54 kann auf der Anzeigeeinheit 56 Piktogramme 96 darstellen, wobei die Piktogramme 96 in Form jeweils eines eindeutigen Symbol einen Parameter oder ein Arbeitsaggregat kennzeichnen können. Die Piktogramme 96 können jeweils einem Anzeigeelemente 58 und/oder einem Indikatorelemente 84,86,88,90,92,94 zugeordnet sein, um die Zuordnung eines Anzeigeelementes 58 und/oder eines Indikatorelementes 84,86,88,90,92,94 zu einem Parameter und/oder Arbeitsaggregat 14 zu kennzeichnen.

Die dargestellten Anzeigeelemente 58, Indikatorelemente 84,86,88,90,92,94 und/oder Piktogramme 96 können zur Einstellung der zugeordneten Parameter und/oder Arbeitsaggregate 14 durch den Bediener anwählbar und aktivierbar sein, beispielsweise durch Auswahl mittels eines berührungsempfindlichen Touchscreen-Bildschirmes. Eine Erhöhung des in Figur 2 durch die Balkenanzeige 80 dargestellten absoluten Korndurchsatz kann beispielsweise durch Auswahl und Aktivierung des Indikatorelementes 84,86, welches der Reinigungseinrichtung 38 zugeordnet ist, erfolgen, wodurch eine Optimierung der Einstellungen der Reinigungseinrichtung 38 vorgenommen werden kann, so dass dessen Leistungsfähigkeit und damit der absolut erreichbare Korndurchsatz erhöht werden kann. Die Einstellung von Parametern und/oder Arbeitsaggregaten 14, hier der Reinigungseinrichtung 38 und/oder der Abscheidevorrichtung 32, kann automatisch und/oder manuell, beispielsweise durch ein geführtes Bedienungsmenü, erfolgen. So ist beispielsweise von dem Bediener das gewünschte, insbesondere absolute, Verlustniveau einstellbar, welches durch eine automatische und/oder manuelle, insbesondere geführte, Einstellung der entsprechenden Arbeitsaggregate 14 erreicht werden kann. Zudem ist eine, insbesondere automatische, Kalibrierung der gemessenen Verluste und/oder der Verlustanzeige durchführbar, wodurch eine absolute Verlustanzeige 70,74 ermöglicht werden kann. Dies hat den Vorteil, dass der Bediener eine einfachere monetäre Bewertung der Verlust vornehmen kann. Eine Einstellung der Parameter und/oder Arbeitsaggregate 14 kann über eine mit der Anzeigevorrichtung (54) verbindbare Steuer- und Regeleinrichtung und/oder ein Fahrerassistenzsystem erfolgen.

**Bezugszeichenliste:**

| | | | |
|---|---|---|---|
| 10 | Landwirtschaftliche Arbeitsmaschine | 66 | Anzeigefläche |
| 12 | Mähdrescher | 68 | Teilfläche |
| 14 | Arbeitsaggregat | 70 | Verlustanzeige |
| 16 | Schneidwerk | 72 | Überkehranzeige |
| 18 | Erntegut | 74 | Verlustteilfläche |
| 20 | Schrägförderer | 76 | Kornüberkehr |
| 22 | Gutstrom | 78 | Zentralanzeige |
| 24 | Dreschorgane | 80 | Balkenanzeige |
| 26 | Erste Dreschtrommel | 82 | Skalierung |
| 28 | Zweite Dreschtrommel | 84 | Indikatorelement |
| 30 | Umlenktrommel | 86 | Indikatorelement Reinigungseinrichtunc |
| 32 | Abscheidevorrichtung | 88 | Indikatorelement Abscheidevorrichtung |
| 34 | Rücklaufboden | 90 | Indikatorelement Motorauslastung |
| 36 | Zuführboden | 92 | Indikatorelement Überkehr |
| 38 | Reinigungseinrichtung | 94 | Indikatorelement Kornüberkehr |
| 40 | Reinigungssiebe | 96 | Piktogramm |
| 42 | Gebläse | | |
| 44 | Elevator | | |
| 46 | Korntank | | |
| 48 | Überkehr | | |
| 50 | Überkehrfördereinrichtung | | |
| 52 | Fahrerkabine | | |
| 54 | Anzeigevorrichtung | | |
| 56 | Anzeigeeinheit | | |
| 58 | Anzeigeelement | | |
| 60 | Grundfläche | | |
| 62 | Mittelpunkt | | |
| 64 | Motorauslastungsanzeige | | |

## Patentansprüche

1. Landwirtschaftliche Arbeitsmaschine mit mindestens einem Arbeitsaggregat (14) und einer Anzeigevorrichtung (54) zur Anzeige und/oder Einstellung von Parametern der Arbeitsmaschine (10) und/oder des mindestens einen Arbeitsaggregates (14), wobei die Anzeigevorrichtung (54) zur Visualisierung von parameterbezogenen Werten mindestens eine Anzeigeeinheit (56) aufweist, **dadurch gekennzeichnet, dass** die Anzeigeeinheit (56) konzentrisch angeordnete, als Anzeigeflächen (66) flächig ausgeführte Anzeigeelemente (58) in Form von Kreisringausschnitten umfasst, wobei die Anzeigeelemente (58) einstellbare Parameter der Arbeitsmaschine (10) und/oder der Arbeitsaggregate (14) visualisieren und jedes Anzeigeelement (58) in der Größe dynamisch an den Wert des visualisierten Parameters der Arbeitsmaschine (10) und/oder der Arbeitsaggregate (14) anpassbar ist und
mindestens eine die Anzeigeelemente (58) radial außenseitig zumindest teilweise umfassende, den Wert eines einem Anzeigeelement (58) zugeordneten Parameters anzeigende Balkenanzeige (80) aufweist, wobei die den Anzeigeelementen (58) zugeordnete kreisbogenförmige Balkenanzeige (80) die Parameter der Anzeigenelemente (58) entlang einer parameterabhängigen Skalierung (82) visualisiert und der anzuzeigende Wert dynamisch in Form eines Balkens angezeigt wird, wobei die Balkenanzeige (80) einen für die Ernteleistung der Arbeitsmaschine (10) wesentlichen Parameter visualisiert,
wobei an der Balkenanzeige (80) mindestens ein Indikatorelement (84,86,88,90,92,94) zur Anzeige eines definierten Wertes des von der Balkenanzeige (80) visualisierten Parameters angeordnet ist, wobei das der Balkenanzeige (80) zugeordnete Indikatorelemente (84,86,88,90,92,94) die von der oder den Balkenanzeigen (80) visualisierten Parameter der Arbeitsmaschine (10) und/oder der Arbeitsaggregate (14) markiert und
den Anzeigenelementen (58) und der Balkenanzeige (80) für dieselben Parameter der Arbeitsmaschine (10) und/oder der Arbeitsaggregate (14) dieselben Piktogramme (96) zugeordnet sind
und die Position des jeweilige Indikatorelement (84) der maximalen Leistungsfähigkeit des jeweils visualisierten Parameters und/oder Arbeitsaggregates (14) entspricht.

2. Landwirtschaftliche Arbeitsmaschine nach einem oder mehreren der vorherigen Ansprüche, **dadurch gekennzeichnet, dass** die Anzeigefläche (66) eines Anzeigeelementes (58) mehrere Teilflächen (68) aufweist, wobei den Teilflächen (68) unterschiedliche Parameter zugeordnet sind und
die der Anzeigefläche (66) zugeordneten Teilflächen (68) eine Verlustanzeige (70) repräsentieren wobei die Teilflächen (68) zumindest den Verlust (74) einer Reinigungseinrichtung (38) und den Verlust (70) einer Abscheidevorrichtung (32) umfassen und die Aufsummierung der Teilflächen (68) in radialer Richtung dem Gesamtverlust der landwirtschaftlichen Arbeitsmaschine (10) entspricht.

3. Landwirtschaftliche Arbeitsmaschine nach einem oder mehreren der vorherigen Ansprüche, **dadurch gekennzeichnet, dass** die Anzeigefläche (66) eines Anzeigeelementes (58) mehrere Teilflächen (68) aufweist, wobei den Teilflächen (68) unterschiedliche Parameter zuordbar sind und die einer Anzeigefläche (66) zugeordneten Teilflächen (68) eine Überkehranzeige (72) repräsentieren und wobei die Teilflächen (68) zumindest den Gesamtvolumenstrom einer Überkehr (48) als Überkehranzeige (72) und den Kornvolumenstrom als Kornüberkehr (76) umfassen und wobei das relative Flächenverhältnis der Teilflächen (58, 72, 68, 76) zueinander dem relativen Verhältnis des Gesamtvolumenstroms der Überkehr (48) zur Kornüberkehr (76) der landwirtschaftlichen Arbeitsmaschine (10) entspricht.

4. Landwirtschaftliche Arbeitsmaschine nach einem oder mehreren der vorherigen Ansprüche, **dadurch gekennzeichnet, dass** ein Minimal- und/oder Maximalwert eines Anzeigeelementes (58) anzeigbar ist.

5. Landwirtschaftliche Arbeitsmaschine nach einem oder mehreren der vorherigen Ansprüche, **dadurch gekennzeichnet, dass** die Anzeigeeinheit (56) eine Zentralanzeige (78) aufweist, welche konzentrisch radial innerhalb der Anzeigeelemente (58) angeordnet ist.

6. Landwirtschaftliche Arbeitsmaschine nach einem oder mehreren der vorherigen Ansprüche, **dadurch gekennzeichnet, dass** die Indikatorelemente (84,86,88,90,92,94) definierte Werte der Parameter der landwirtschaflichen Arbeitsmaschine und/oder Arbeitsaggregate (14) repräsentieren.

7. Landwirtschaftliche Arbeitsmaschine nach einem oder mehreren der vorherigen Ansprüche, **dadurch gekennzeichnet, dass** den Anzeigeelementen (58) und/oder Indikatorelementen (84,86,88,90,92,94) jeweils mindestens ein Piktogramm (96) zugeordnet ist.

8. Landwirtschaftliche Arbeitsmaschine nach einem oder mehreren der vorherigen Ansprüche, **dadurch gekennzeichnet, dass** die den Anzeigeelementen (58), Indikatorelementen (84,86,88,90,92,94) und/oder Piktogrammen (96) zugeordneten Parameter und/oder Arbeitsaggregate (14), insbesondere nach einer Auswahl eines zugeordneten Anzeigeelementes (58), Indikatorelementes (84,86,88,90,92,94) und/oder Piktogramms (96), manuell oder automatisch einstellbar sind.

9. Landwirtschaftliche Arbeitsmaschine nach einem oder mehreren der vorherigen Ansprüche, **dadurch gekennzeichnet, dass** die Zentralanzeige (78) die Maximalleistung der landwirtschaftlichen Arbeitsmaschine vorzugsweise eine Ernteleistung in Tonnen/Hektar und/oder eine relative Auslastung der landwirtschaftlichen Arbeitsmaschine (10) in Prozent visualisiert.

10. Landwirtschaftliche Arbeitsmaschine nach einem oder mehreren der vorherigen Ansprüche, **dadurch gekennzeichnet, dass** die Anzeigeeinheit (56) veränderbar und/oder erweiterbar ist.

11. Landwirtschaftliche Arbeitsmaschine nach einem oder mehreren der vorherigen Ansprüche, **dadurch gekennzeichnet, dass** die Anzeigeeinheit (56) eine Grundfläche (60) zur Anzeige der Anzeigeelemente (58), der Balkenanzeige (80) und/oder der Zentralanzeige (78) aufweist.

12. Landwirtschaftliche Arbeitsmaschine nach einem oder mehreren der vorherigen Ansprüche, **dadurch gekennzeichnet, dass** die landwirtschaftliche Arbeitsmaschine (10) eine mit der Anzeigevorrichtung (54) verbindbare Steuer- und Regeleinrichtung und/oder ein Fahrerassistenzsystem aufweist.

## Claims

1. An agricultural working machine comprising at least one working assembly (14) and a display device (54) for displaying and/or adjusting parameters of the working machine (10) and/or the at least one working assembly (14), wherein the display device (54) has at least one display unit (56) for the visualisation of parameter-related values, **characterised in that** the display unit includes concentrically arranged display elements (58) which are areally provided as display surfaces (66) in the form of circular ring portions, wherein the display elements (58) visualise adjustable parameters of the working machine (10) and/or the working assemblies (14) and each display element (58) is adaptable in size dynamically to the value of the visualised parameter of the working machine (10) and/or the working assemblies (14), and
at least one bar display (80) which at least partially surrounds the display elements (58) radially on the outside and which displays the value of a parameter associated with a display element (58), wherein the bar display (80) which is in the shape of a circular arc and which is associated with the display elements (58) visualises the parameters of the display elements (58) along a parameter-dependent scaling (82) and the value to be displayed is displayed dynamically in the form of a bar, wherein the bar display (80) visualises a parameter which is essential for the harvesting performance of the working machine (10),
wherein at least one indicator element (84, 86, 88, 90, 92, 94) for displaying a defined value of the parameter visualised by the bar display (80) is arranged at the bar display (80), wherein the indicator elements (84, 86, 88, 90, 92, 94) associated with the bar display (80) mark the parameters of the working machine (10) and/or the working assemblies (14), that are visualised by the bar display or displays (80), and
the same pictograms (96) are associated with the display elements (58) and the bar display (80) for the same parameters of the working machine (10) and/or the working assemblies (14), and the position of the respective indicator element (84) corresponds to the maximum performance capability of the respectively visualised parameter and/or working assembly (14).

2. An agricultural working machine according to one of more of the preceding claims **characterised in that** the display surface (66) of a display element (58) has a plurality of surface portions (68), wherein different parameters are associated with the surface portions (68), and
the surface portions (68) associated with the display surface (66) represent a loss display (70), wherein the surface portions (68) include at least the loss (74) of a cleaning device (38) and the loss (70) of a separating device (31) and summing of the surface portions (68) in the radial direction corresponds to the total loss of the agricultural working machine (10).

3. An agricultural working machine according to one or more of the preceding claims **characterised in that** the display surface (66) of a display element (58) has a plurality of surface portions (68), wherein different parameters can be associated with the surface portions (68) and the surface portions (68) associated with a display surface (66) represent a returns display (72) and wherein the surface portions (66) include at least the total volume flow of a returns (48) as the returns display (72) and the grain volume flow as the grain returns (76) and wherein the relative surface area proportion of the surface portions (58, 72, 68, 76) to each other corresponds to the relative proportion of the total volume flow of the returns (48) to the grain returns (76) of the agricultural working machine (10).

4. An agricultural working machine according to one or more of the preceding claims **characterised in that** a minimum and/or maximum value of the display element (58) can be displayed.

5. An agricultural working machine according to one of more of the preceding claims **characterised in that** the display unit (56) has a central display (78) arranged concentrically radially within the display elements (58).

6. An agricultural working machine according to one of more of the preceding claims **characterised in that** the indicator elements (84, 86, 88, 90, 92, 94) represent defined values of the parameters of the agricultural working machine and/or working assemblies (14).

7. An agricultural working machine according to one of more of the preceding claims **characterised in that** at least one respective pictogram (96) is associated with the display elements (58) and/or indicator elements (84, 86, 88, 90, 92, 94).

8. An agricultural working machine according to one of more of the preceding claims **characterised in that** the parameters and/or working assemblies (14) associated with the display elements (58), indicator elements (84, 86, 88, 90, 92, 94) and/or pictograms (96) can be manually or automatically adjusted, in particular in accordance with a selection of an associated display element (58), indicator element (84, 86, 88, 90, 92, 94) and/or ictogram (96).

9. An agricultural working machine according to one of more of the preceding claims **characterised in that** the central display (78) visualises the maximum performance of the agricultural working machine, preferably a harvesting machine in tonnes/hectares and/or a relative utilisation of the agricultural working machine (10) in percent.

10. An agricultural working machine according to one of more of the preceding claims **characterised in that** the display unit (56) is variable and/or expandable.

11. An agricultural working machine according to one of more of the preceding claims **characterised in that** the display unit (56) has a base area (60) for displaying the display elements (58), the bar display (80) and/or the central display (78).

12. An agricultural working machine according to one of more of the preceding claims **characterised in that** the agricultural working machine (10) has an open-loop and closed-loop control device which can be connected to the display device (54), and/or a driver assist system.

## Revendications

1. Machine de travail agricole comprenant au moins un organe de travail (14) et un dispositif d'affichage (54) pour l'affichage et/ou le réglage de paramètres de la machine de travail (10) et/ou du au moins un organe de travail (14), le dispositif d'affichage (54) comportant au moins une unité d'affichage (56) pour visualiser des valeurs liées aux paramètres, **caractérisée en ce que** l'unité d'affichage (56) comporte des éléments d'affichage (58) en forme de secteurs annulaires disposés concentriquement et conçus de manière plane sous la forme de surfaces d'affichage (66), les éléments d'affichage (58) visualisant des paramètres réglables de la machine de travail (10) et/ou des organes de travail (14), et chaque élément d'affichage (58) étant adaptable dynamiquement, par sa taille, à la valeur du paramètre visualisé de la machine de travail (10) et/ou des organes de travail (14), et au moins un affichage à barres (80) entourant au moins en partie les éléments d'affichage (58) radialement à l'extérieur et indiquant la valeur d'un paramètre associé à un élément d'affichage (58), l'affichage à barres arqué (80) associé aux éléments d'affichage (58) visualisant les paramètres des éléments d'affichage (58) le long d'une graduation (82) dépendante de paramètres, et la valeur à afficher étant affichée dynamiquement sous forme de barre, l'affichage à barre (80) visualisant un paramètre essentiel pour le rendement de récolte de la machine de travail (10), sur l'affichage à barre (80) étant disposé au moins un élément indicateur (84, 86, 88, 90, 92, 94) pour afficher une valeur définie du paramètre visualisé par l'affichage à barre (80), le au moins un élément indicateur (84, 86, 88, 90, 92, 94) associé à l'affichage à barre (80) représentant les paramètres de la machine de travail (10) et/ou des organes de travail (14) visualisés par la ou les affichages à barre (80), et aux éléments d'affichage (58) et à l'affichage à barre (80) étant associés, pour les mêmes paramètres de la machine de travail (10) et/ou des organes de travail (14), les mêmes pictogrammes (96), et la position de l'élément indicateur respectif (84) correspondant à la capacité maximale du paramètre et/ou de l'organe de travail (14) respectivement visualisés.

2. Machine de travail agricole selon une ou plusieurs des revendications précédentes, **caractérisée en ce que** la surface d'affichage (66) d'un élément d'affichage (58) comporte plusieurs surfaces partielles (68), aux surfaces partielles (68) étant associés divers paramètres, et les surfaces partielles (68) associées à la surface d'affichage (66) représentant un affichage de perte (70), les surfaces partielles (68) comprenant au moins la perte (74) d'un équipement de nettoyage (38) et la perte (70) d'un dispositif séparateur (32), et le total des surfaces partielles (68) dans la direction radiale correspondant à la perte totale de la machine de travail agricole (10).

3. Machine de travail agricole selon une ou plusieurs des revendications précédentes, **caractérisée en ce que** la surface d'affichage (66) d'un élément d'affichage (58) comporte plusieurs surfaces partielles (68), aux surfaces partielles (68) étant associables divers paramètres, et les surfaces partielles (68) associées à une surface d'affichage (66) représentant un affichage de retour à ôtons (72), et les surfaces partielles (68) comprenant au moins le flux volumique total d'un retour à ôtons (48) en tant qu'affichage de retour à ôtons (72) et le flux volumique de grain en tant que retour de grain (76), et le rapport relatif de surface des surfaces partielles (58, 72, 68, 76) entre elles correspondant au rapport relatif du flux volumique total du retour à ôtons (48) au retour de grain (76) de la machine de travail agricole (10) .

4. Machine de travail agricole selon une ou plusieurs des revendications précédentes, **caractérisée en ce qu'**une valeur minimale et/ou maximale d'un élément d'affichage (58) est affichable.

5. Machine de travail agricole selon une ou plusieurs des revendications précédentes, **caractérisée en ce que** l'unité d'affichage (56) comporte un affichage central (78) qui est disposé de manière radialement concentrique à l'intérieur des éléments d'affichage (58).

6. Machine de travail agricole selon une ou plusieurs des revendications précédentes, **caractérisée en ce que** les éléments indicateurs (84, 86, 88, 90, 92, 94) représentent des valeurs définies des paramètres de la machine de travail agricole et/ou des organes de travail (14).

7. Machine de travail agricole selon une ou plusieurs des revendications précédentes, **caractérisée en ce qu'**à chacun des éléments d'affichage (58) et/ou des éléments indicateurs (84, 86, 88, 90, 92, 94) est associé au moins un pictogramme (96).

8. Machine de travail agricole selon une ou plusieurs des revendications précédentes, **caractérisée en ce que** les paramètres et/ou organes de travail (14) associés aux éléments d'affichage (58), aux éléments indicateurs (84, 86, 88, 90, 92, 94) et/ou aux pictogrammes (96) sont réglables manuellement ou automatiquement, en particulier après une sélection d'un élément d'affichage (58), d'un élément indicateur (84, 86, 88, 90, 92, 94) et/ou d'un pictogramme (96) associé.

9. Machine de travail agricole selon une ou plusieurs des revendications précédentes, **caractérisée en ce que** l'affichage central (78) visualise en pourcentage le rendement maximal de la machine de travail agricole, de préférence un rendement de récolte en tonnes/hectare et/ou un taux de charge relatif de la machine de travail agricole (10).

10. Machine de travail agricole selon une ou plusieurs des revendications précédentes, **caractérisée en ce que** l'unité d'affichage (56) est modifiable et/ou extensible.

11. Machine de travail agricole selon une ou plusieurs des revendications précédentes, **caractérisée en ce que** l'unité d'affichage (56) comporte une surface de fond (60) pour afficher les éléments d'affichage (58), l'affichage à barre (80) et/ou l'affichage central (78).

12. Machine de travail agricole selon une ou plusieurs des revendications précédentes, **caractérisée en ce que** la machine de travail agricole (10) comporte un équipement de commande et de régulation et/ou un système d'assistance à la conduite connectable au dispositif d'affichage (54) .
